# EUROPEAN PATENT SPECIFICATION

(11) **EP 0 562 685 B1**
(45) Date of publication and mention of the grant of the patent: **29.11.1995**
(21) Application number: 93200815.4
(22) Date of filing: 19.03.1993
(51) Int. Cl.: F16G 11/00

(54) **Termination device for butt-connecting cables**
Endstück zur Stossverbindung von Seilen
Dispositif d'extrémité pour connexion de câbles bout-à-bout

(30) Priority: 25.03.1992 IT MI920702
(43) Date of publication of application: 29.09.1993
(73) Proprietor: SAIPEM S.p.A., I-20121 Milan (IT)
(72) Inventor: Brunner, Guido, I-20129 Milan (IT)
(74) Representative: Fusina, Gerolamo

(56) References cited:
- EP-A- 0 342 102
- FR-A- 769 861
- FR-A- 775 474
- US-A- 1 642 573

## Description

This invention relates to a new termination device which, being releasable and easily removable, allows effective and economical cable butt-connection to form cable extensions or endless slings or to install cable terminals, without any reduction in the safe load and without any diameter limitation.

Various methods are already known from the state of the art for butt-connecting cables, one of which comprises splicing, but such a connection has the drawbacks of reducing the safe load and of not being totally releasable in addition to being of high cost for large diameters.

A further known method is to permanently install frusto-conical metal cable terminals at the ends of the cables to be joined together, by opening the strands of each cable end into a cone and fixing the obtained cone by pouring in white metal or resins.

Although this method does not reduce the safe load it has various drawbacks due to the considerable weight of the connection and consequent handling difficulties, the impossibility of release other than by cutting the cable with the consequent impossibility of changing the type of terminal at will, and the need to use a further element for joining said opposing cable terminals together.

FR-A-769861 discloses a termination device for butt-connecting cables having their ends enlarged into frusto-conical shape, this device consisting of a hollow structure in form of two opposing equal cone frustums, with their minor bases arranged at the ends of the structure.

Their major bases are provided by coherent cuts for their coupling by an external cylindrical sleeve that embraces said cone frustums in their enlarged parts. Said cuts are obliquous with respect to the axis of the device.

The object of the present invention is to obviate said drawbacks by providing a termination device for butt-connecting cables and installing cable terminals of various types, which is of low weight and cost, does not reduce the safe load of the resultant cable, does not require additional elements for the connection and is easily removable to hence allow the possible cable terminal to be immediately replaced with another of a different type without cutting the cable, and allow the formation of endless slings of selectable length using modular cable pieces.

This object is substantially attained in that the ends, enlarged into frusto-conical shape by opening out the ends of the cables to be connected together and then pouring in resin, are no longer rigidly secured to cable terminals but are simply inserted into opposing frusto-conical cavities of a structure forming the axial continuity element which, to allow the insertion, is cut in its length and parallelly to the axis of the device into two equal parts.

More specifically, this object is attained by the termination device for butt-connecting cables having their ends enlarged into frusto-conical shape according to claim 1.

From the aforegoing the extreme ease with which a butt connection can be made is immediately apparent, by simply inserting the frusto-conical enlargements of the ends of the cables to be connected into the corresponding frusto-conical cavities of one of said constituent half-shells of the hollow structure, then superposing the other half-shell on the resultant assembly and locking the entire unit with said coupling means. It is also apparent that the device of the invention can be used for butt-connecting the two ends of one and the same cable to form endless slings, or to form any type of cable terminal by inserting the cone frustum of a screw, eyelet or fork connection device instead of the frusto-conical end of a cable.

Again, the facility now provided for easily releasing the device by simply removing said coupling means allows rapid change from one type of connection to another.

According to a preferred embodiment of the invention, said coupling means for maintaining said half-shells of the hollow structure joined together consist of two frusto-conical sleeves cooperating with the corresponding outer surfaces of the two said equal and opposite cone frustums forming said hollow structure, said sleeves being maintained in position by bolts having their axis parallel to the device axis and connecting together the two radial flanges present at the major-diameter facing ends of said sleeves respectively.

According to a modification of the invention, between the two said radial flanges present at the major-diameter facing ends of said sleeves there is interposed a protective ring of elastic material in which said bolts which maintain the sleeves in position are embedded.

According to a further modification of the present invention, said coupling means for maintaining said half-shells of the hollow structure joined together consist of two frusto-conical sleeves cooperating with the corresponding outer surfaces of the two said equal and opposite cone frustums forming said hollow structure, said sleeves being maintained in position by pins or studs having their axis perpendicular to the axis of the sleeves and penetrating the thickness of said sleeves and of the underlying half-shells of the hollow structure.

According to a further modification of the present invention, said coupling means for maintaining said half-shells of the hollow structure joined together consist of two frusto-conical sleeves cooperating with the corresponding outer surfaces of the two said equal and opposite cone frustums forming said hollow structure, said sleeves being maintained in position by two threaded shoulder rings respectively screwed onto a cylindrical section present at the two ends of said hollow structure.

According to a further preferred embodiment of the present invention, said coupling means for maintaining said half-shells of the hollow structure joined together consist of bolts which clamp together flanges provided parallel to said central plane at the lateral edges of said half-shells.

According to a further preferred embodiment of the present invention, said coupling means for maintaining said half-shells of the hollow structure joined together consist of three cylindrical or slightly conical closed retention rings mounted respectively over corresponding cylindrical or slightly conical sections provided at the centre and ends of said hollow structure, said rings being fixed in position by threaded pins or studs.

Finally, according to preferred embodiments of the present invention, the two constituent half-shells of said hollow structure and the frusto-conical sleeves are constructed of composite materials consisting of artificial fibres of high section modulus in a thermosetting resin matrix, or of metal.

The invention is described in detail hereinafter with reference to the accompanying drawings, which illustrate preferred embodiments thereof by way of non-limiting example only, in that technical or constructional modifications can be made thereto without leaving the scope of the present invention.

In said drawings:
Figure 1 is a party sectional perspective view of a termination device for butt-connecting cables according to the invention;
Figure 2 is a longitudinal section through the device of Figure 1;

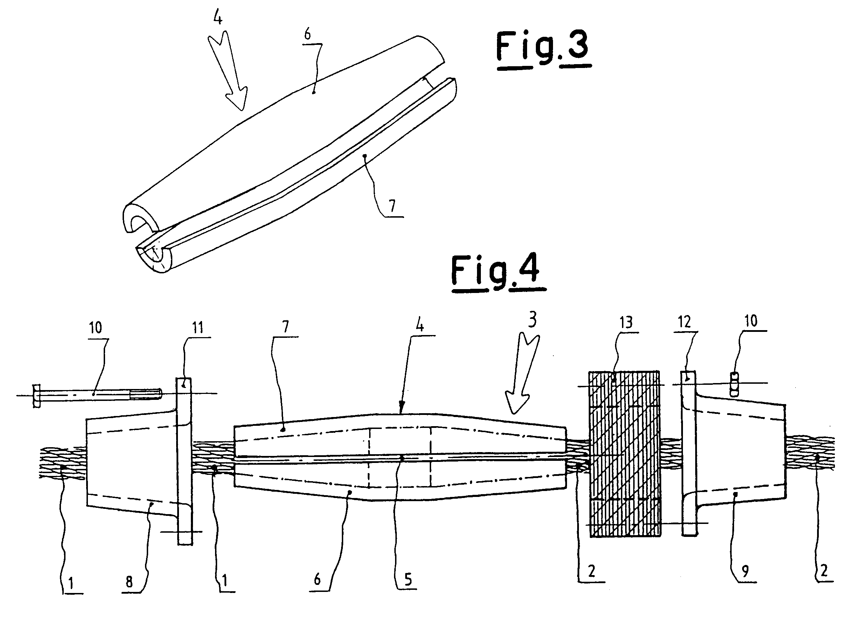

Figure 3 is a perspective view of the two half-shells of the device of Figure 1;
Figure 4 is an exploded side view of the device of Figure 1, for illustrating its assembly procedure;

In the figures the reference numerals 1 and 2 indicate the two cables to be butt-connected together, and having their ends widened out to form a cone frustum 1' and 2' respectively.

Said connection is achieved by a device 3, which provides axial continuity to said cables.

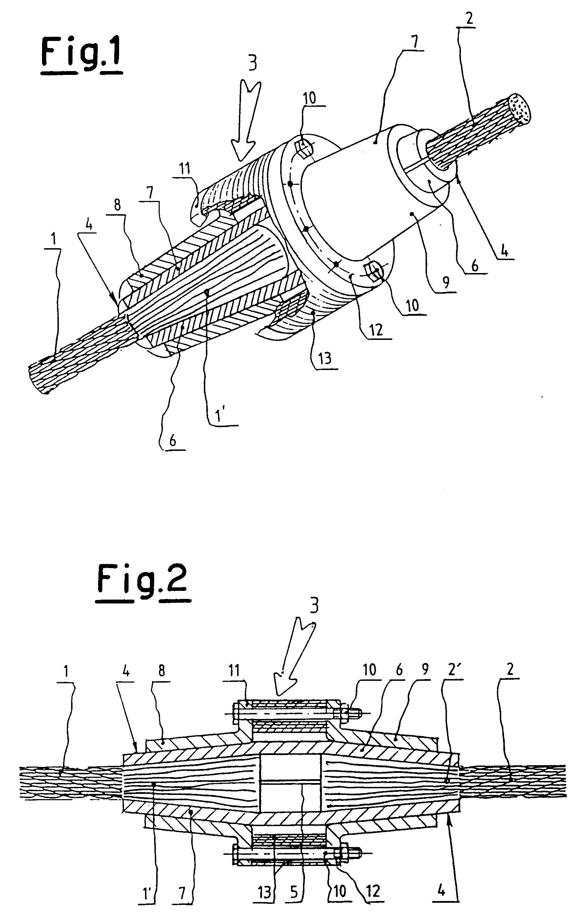

Said device 3 consists of a hollow structure 4 cut along a central plane on the axis 5 into two opposing half-shells 6 and 7 which in their interior define two equal and opposite frusto-conical cavities with their minor bases arranged at the ends of the structure 4 (see specifically Figure 2), and into which the corresponding ends 1' and 2' of said cables 1 and 2 are inserted.

Said half-shells 6 and 7 are kept joined together by the two frusto-conical sleeves 8 and 9, which are slid on from the ends of the hollow structure 4 and are held in position by bolts 10 having their axis parallel to the axis 5 and connecting together two radial flanges 11 and 12 provided at the facing major-diameter ends of said sleeves 8 and 9 respectively. Between said flanges 11 and 12 there is interposed a protective ring 13 of elastic material in which said bolts 10 are embedded (see specifically Figures 1 and 2).

The assembly procedure for such a device is now apparent.

Having slid the sleeve 8 onto the cable 1 and the sleeve 9 and protective ring 13 onto the cable 2 (see specifically Figure 4), the enlarged ends 1' and 2' of said cables are inserted into the corresponding opposing cavities of the half-shell 6 of the hollow structure 4, and the half-shell 7 is superposed on the half-shell 6. The two sleeves 8 and 9 are then brought close to each other by siding them along the outer frusto-conical surfaces of the two half-shells 6 and 7 until they stop, after which they are fixed in position by the bolts 10, which clamp the two flanges 11 and 12 of said sleeves between them.

## Claims

1. A termination device (3) for butt-connecting cables (1, 2) having their ends (1', 2') enlarged into frusto-conical shape, consisting of a hollow structure (4) in the form of two opposing equal cone frustums (6, 7) with their minor bases arranged at the ends of the structure (4), which cooperates via its inner frusto-conical surfaces with the corresponding mating outer surfaces of said frusto-conically enlarged ends of the cables to be connected, said hollow structure being cut in its length and parallelly to the device axis (5) into two equal half-shells and being provided with coupling means for maintaining said half-shells joined together,
characterised in that said coupling means for maintaining said half-shells of the hollow structure joined together consist of two frusto-conical sleeves (8, 9) cooperating with the corresponding outer surfaces of the two said equal and opposite cone frustums (6, 7) forming said hollow structure, said sleeves being maintained in position by bolts (10) having their axis parallel to the device axis (5) and connecting together the two radial flanges (11, 12) present at the major-diameter facing ends of said sleeves respectively.

2. A termination device as claimed in claim 1, characterised in that between the two said radial flanges (11, 12) present at the major-diameter facing ends of said sleeves there is interposed a protective ring (13) of elastic material in which said bolts which maintain the sleeves in position are embedded.

3. A termination device as claimed in claim 1, characterised in that the two said constituent half-shells (6, 7) of said hollow structure are constructed of composite materials consisting of artificial fibres of high section modulus in a thermosetting resin matrix.

4. A termination device as claimed in any one of the preceding claims, characterised in that the two said constituent half-shells (6, 7) of said hollow structure are of metal construction.

5. A termination device as claimed in any one of the preceding claims characterised in that the two said frusto-conical sleeves (8, 9) are constructed of composite materials consisting of artificial fibres of high section modulus in a thermosetting resin matrix.

6. A termination device as claimed in any one of the preceding claims, characterised in that the two said frusto-conical sleeves (8, 9) are of metal construction.

## Patentansprüche

1. Ein Endstück (3) zur Stoßverbindung von Seilen (1, 2), deren Enden (1', 2') zu Konusgestalt erweitert sind, bestehend aus einem hohlen Aufbau (4) in der Form von zwei von einander wegzeigenden gleichen Konusstümpfen (6, 7), deren kleinere Basen an den Enden des Aufbaus (4) angeordnet sind, welcher über seine inneren konusflächen mit den entsprechenden passenden äußeren Flächen der konusförmig erweiternden Enden der zu verbindenden Seile zusammenarbeitet, wobei der Hohlaufbau in seiner Länge und parallel zu seiner Achse (5) in zwei gleiche Halbschalen unterteilt ist und mit Kupplungsmitteln ausgebildet ist, um die beiden Halbschalen in miteinander verbundener Lage zu halten, dadurch gekennzeichnet, daß die Kupplungsmittel für den Zusammenhalt der miteinander verbundenen Halbschalen des Hohlaufbaus aus zwei konusförmigen Buchsen (8, 9) besteht, die mit den entsprechenden äußeren Flächen der einander entsprechenden und voneinander wegzeigenden den Hohlaufbau bildenden Konusteile (6, 7) zusammenarbeiten, wobei die Buchsen durch Bolzen (10) in ihrer Lage gehalten werden, deren Achse parallel zur Achse (5) des Endstücks ausgerichtet ist und die die beiden Radialflansche (11, 12) miteinander verbinden, die jeweils an den Stirnenden der Buchsen mit den größeren Durchmessern ausgebildet sind.

2. Ein Endstück, wie in Anspruch 1 beansprucht, dadurch gekennzeichnet, daß zwischen den beiden Radialflanschen (11, 12), die an den Stirnenden der Buchsen mit den größeren Durchmessern vorhanden sind, ein Schutzring (13) aus elastischem Material zwischengesetzt ist, in welchem die Bolzen, welche die Buchsen zusammenhalten, in ihrer Lage eingebettet sind.

3. Ein Endstück, wie in Anspruch 1 beansprucht, dadurch gekennzeichnet, daß die beiden Halbschalen (6, 7) des Hohlaufbaus aus zusammengesetzten Materialien aufgebaut sind, die künstliche Fasern mit hohem Widerstandsmoment in einer Matrix aus wärmehärtendem Harz umfassen.

4. Ein Endstück, wie in irgendeinem der vorangehenden Ansprüche beansprucht, dadurch gekennzeichnet, daß die beiden Komponenten-Halbschalen (6, 7) des Hohlaufbaus aus einer Metallkonstruktion gebildet sind.

5. Ein Endstück, wie in irgendeinem der vorangehenden Ansprüche beansprucht, dadurch gekennzeichnet, daß die beiden konusförmigen Buchsen (8, 9) aus zusammengesetzten Materialien aufgebaut sind, die künstliche Fasern mit hohem Widerstandsmoment in einer Matrix aus wärmehärtendem Harz umfassen.

6. Ein Endstück, wie in irgendeinem der vorangehenden Ansprüche beansprucht, dadurch gekennzeichnet, daß die beiden konusförmigen Buchsen (8, 9) aus einer Metallkonstruktion gebildet sind.

## Revendications

1. Dispositif de terminaison (3) pour raccorder bout-à-bout des câbles (1, 2) ayant leurs extrémités (1', 2') élargies en troncs de cône, comprenant une structure creuse (4) en forme de deux troncs de cône identiques en vis-à-vis (6, 7) dont les petites bases sont disposées aux extrémités de ladite structure (4), laquelle coopère par ses faces intérieures tronconiques avec les faces extérieures appariées correspondantes desdites extrémités élargies en tronc de cône des câbles à raccorder, ladite structure creuse étant coupée dans sa longueur et parallèlement à l'axe (5) du dispositif en deux demi-coques identiques et étant dotée d'un moyen de couplage pour maintenir lesdites demi-coques réunies l'une à l'autre,
caractérisé en ce que ledit moyen de couplage servant à maintenir lesdites demi-coques de la structure creuse réunies l'une à l'autre comprend deux manchons tronconiques (8, 9) qui coopèrent avec les faces extérieures correspondantes desdits deux troncs de cône identiques en vis-à-vis (6, 7) formant ladite structure creuse, lesdits manchons étant maintenus en place par des boulons (10) qui ont leur axe parallèle à l'axe (5) du dispositif et qui relient l'une à l'autre les deux collerettes radiales (11, 12) se trouvant respectivement au niveau des extrémités de grand diamètre desdits manchons qui se font face.

2. Dispositif de terminaison selon la revendication 1, caractérisé en ce qu'entre lesdites deux collerettes radiales (11, 12) se trouvant au niveau des extrémités de grand diamètre desdits manchons qui se font face est interposée une bague de protection (13) en matériau élastique dans laquelle sont noyés lesdits boulons maintenant les manchons en place.

3. Dispositif de terminaison selon la revendication 1, caractérisé en ce que lesdites deux demis-coques (6, 7) constituant ladite structure creuse sont faites de matériaux composites comprenant des fibres artificielles à fort moment résistant dans une matrice de résine thermodurcissable.

4. Dispositif de terminaison selon l'une quelconque des précédentes revendications, caractérisé en ce que lesdites deux demi-coques (6, 7) constituant ladite structure creuse sont faites de métal.

5. Dispositif de terminaison selon l'une quelconque des précédentes revendications, caractérisé en ce que lesdits deux manchons tronconiques (8, 9) sont faits de matériaux composites comprenant des fibres artificielles à fort moment résistant dans une matrice de résine thermodurcissable.

6. Dispositif de terminaison selon l'une quelconque des précédentes revendications, caractérisé en ce que lesdits deux manchons tronconiques (8, 9) sont faits de métal.
